**Europäisches Patentamt**

**European Patent Office**

**Office européen des brevets**

(19)

(11) Veröffentlichungsnummer : **0 110 139**
**B1**

(12) **EUROPÄISCHE PATENTSCHRIFT**

(45) Veröffentlichungstag der Patentschrift :
28.05.86

(51) Int. Cl.⁴ : **F 16 K 31/06**

(21) Anmeldenummer : **83110725.5**

(22) Anmeldetag : **27.10.83**

(54) **Elektromagnetisch betätigbares 3/2-Wegeventil zur Steuerung eines Verbrauchers in einem Druckleitungssystem.**

(30) Priorität : 29.10.82 DE 3240103
09.04.83 DEU 8310399

(43) Veröffentlichungstag der Anmeldung :
13.06.84 Patentblatt 84/24

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
DE-A- 2 855 902
DE-B- 1 084 537
DE-B- 1 157 865
DE-B- 1 163 450
DE-B- 1 272 664
DE-B- 2 345 235

(73) Patentinhaber : **A. und K. Müller GmbH & Co. KG**
**Bücherstrasse 31-37**
**D-4000 Düsseldorf 13 (DE)**

(72) Erfinder : **Moldenhauer, Hermann**
**Lüdenscheider Strasse 2**
**D-4000 Düsseldorf (DE)**

(74) Vertreter : **Feder, Heinz, Dr. et al**
**Dominikanerstrasse 37**
**D-4000 Düsseldorf 11 (DE)**

EP 0 110 139 B1

Jouve, 18, rue St-Denis, 75001 Paris, France

## Beschreibung

Die Erfindung betrifft ein elektromagnetisch betätigbares 3/2-Wegeventil zur Steuerung eines Verbrauchers in einem Druckleitungssystem mit einem Ventilgehäuse, in dem eine einseitig offene Ventilkammer angeordnet ist, die durch einen ersten Ventilsitz und einen ersten Kanal mit einem Unterdruckanschluß und über einen zweiten Kanal mit einem Arbeitsanschluß verbunden ist und einem die offene Seite der Ventilkammer abschließenden, mit dem Ventilgehäuse fest verbundenen Ventiloberteil, an dem ein Magnetsystem angeordnet ist, mit einer Magnetspule, in welcher ein in einem Führungsrohr geführter Magentanker angeordnet ist, der einem im Oberteil der Magnetspule angeordneten, mit einem Magnetjoch verbundenen Kopfstück gegenüberliegt und der an seinem, dem ersten Ventilsitz zugekehrten Ende mit einem beidseitig wirkenden Ventilteller verbunden ist, wobei gegenüber der dem ersten Ventilsitz abgewandten Seite des Ventiltellers ein zweiter Ventilsitz angeordnet ist, durch den die Ventilkammer mit einem seitlich am Ventiloberteil im Bereich zwischen dem zweiten Ventilsitz und dem unteren Ende des Führungsrohres für den Magnetanker angeordneten Rücklaufanschluß verbunden ist.

Ein derartig aufgebautes 3/2-Wegeventil ist grundsätzlich bekannt und in der DE-B-1 084 537 beschrieben. Das bekannte 3/2-Wegeventil ist in erster Linie als Steuerventil in hydraulischen Anlagen, beispielsweise zum Betrieb von Werkzeugmaschinen oder hydraulischen Pressen, gedacht.

Grundsätzlich können 3/2-Wegeventile dieser Bauart auch zur Steuerung eines Verbrauchers in Unterdruckleitungssystemen, insbesondere bei Malkanlagen, verwendet werden. Das hauptanwendungsgebiet liegt hierbei in der Verwendung als Pulsatorventil bei der pulsweisen Ansteuerung des Melkgeschirrs mit Unterdruck.

In diesem Falle sollen derartige Ventile einer ganzen Anzahl von Forderungen genügen. Diese sind folgende :

a) Hohe Betriebssicherheit in staubiger und feuchter Umgebung ;

b) größtmöglicher Luftdurchsatz bei möglichst geringer elektrischer Betätigungsleistung ;

c) möglichst kleine Umschaltzeiten ;

d) geringer Verschleiß bei hoher Schalthäufigkeit in ungeölter Luft ;

e) Aufrechterhalten der Funktionssicherheit auch bei stärkeren Schwankungen der Betriebsspannung (Batteriebetrieb) ;

f) einfache Zerlegungs- und Zusammensetzungsmöglichkeit des Ventils ohne großen Aufwand ;

g) Verwendbarkeit des Ventils für Gleich- und Wechselstrom ;

h) Korrosionsbeständigkeit gegenüber aggressiver Umluft.

Bei einem Ventil, das als Pulsatorventil eingesetzt wird, ist die Forderung nach einem großen Luftdurchsatz besonders wichtig. Es hat sich gezeigt, daß bei Ventilen mit zu kleinen Durchsatzmengen die sogenannte « Pulskurve » des Ventils, welche den zeitlichen Verlauf des Unterdruckes in dem über das Ventil evakuierten Raum angibt und im wesentlichen einen rechteckigen Verlauf haben sollte, stark verschliffen ist und erhebliche Anstiegs- und Abfallzeiten auftreten, was zur Folge hat, daß das Verhältnis von evakuiertem und belüftetem Melkzeug nicht mehr mit dem elektrisch gesteuerten Pulstakt übereinstimmt.

Die Forderung nach hoher Funktionssicherheit ist insbesondere im Anwendungsfall bei Melkanlagen von sehr großer Bedeutung, da aus sicherheitstechnischen Forderungen heraus nur Pulsator-Ventile mit einer Schutzkleinspannung (12 bis 24V) zum Einsatz kommen. Wegen der exakten Steuermöglichkeit wird vorzugsweise Gleichstrom zur Ansteuerung verwendet. Da in den elektrischen Zuleitungen der Ventile größere Spannungsabfälle entstehen können, ist es besonders wichtig, daß das Ventil einen sehr großen elektrischen Arbeitsbereich aufweist.

Die der Erfindung zugrunde liegende Aufgabe bestand darin, ein 3/2-Wegeventil der eingangs erwähnten Bauart so zu verbessern, daß es einerseits für Unterdrucksysteme und Überdrucksysteme gleichermaßen brauchbar ist und die oben aufgestellten Forderungen in möglichst optimaler Weise erfüllt sind.

Die Lösung dieser Aufgabe erfolgt erfindungsgemäß dadurch, daß die Querschnittsfläche des Durchtrittsraums zwischen dem Ventilschaft und dem zweiten Ventilsitz gleich der wirksamen Querschnittsfläche des Druckanschlusses ist und der Magnetanker gegenüber dem Medium dichtend, aber reibungsarm im Führungsrohr geführt ist, in dem im Führungsrohr eine Folie aus einem fluorhaltigen Polymer in den an das Kopfstück angrenzenden Abschnitt des Führungsrohres auf einer vorgegebenen Länge den Magnetanker an seiner Mantelfläche umfassend eingelegt und radial und axial fixiert ist, wobei die wirksame Querschnittsfläche des Magnetankers bei einem Ventil für ein Unterdruckleitungssystem um einen vorgegebenen Betrag kleiner und bei einem Ventil für ein Überdruckleitungssystem um einen vorgegebenen Betrag größer ist als der wirksame Querschnitt jedes der beiden Ventilsitze.

Es hat sich gezeigt, daß das erfindungsgemäße Ventil die oben angegebenen Forderungen in hervorragender Weise erfüllt und insbesondere bei seinem Einsatz als Pulsatorventil Pulskurven mit sehr kurzen Anstiegs- und Abfallzeiten erreicht werden können.

Das erfindungsgemäß Ventil ist sowohl für Unterdrucksysteme als auch für Überdrucksysteme verwendbar. Bei Unterdrucksystemen ist die wirksame Querschnittsfläche des Magnetankers kleiner als die wirksamen Querschnitte jedes der beiden Ventilsitze. Wie weiter unten anhand eines Ausführungsbeispiels näher erläutert, kann bei dieser Ausbildung die elektrische Betätigungsleistung auf einen Bruchteil reduziert werden, weil über den magnetanker jeweils nur die der Flächendifferenz zwischen Magnetanker und den Ventilsitzen entsprechende Kraft aufgebracht werden muß.

Bei Überdrucksystemen ist dagegen die wirksame Querschnittsfläche des Magnetankers größer als der wirksame Querschnitt jedes der beiden Ventilsitze. Auch in diesem Falle braucht über den Magnetanker nur eine der Flächendifferenz entsprechende Kraft aufgebracht zu werden.

Es kann dann bei beiden Ausbildungsformen auf die sonst bei derartigen Ventilen übliche Rückholfeder meist verzichtet werden und der Aufbau des Ventils wird besonders einfach.

Durch eine unterschiedlich große Ausbildung der beiden Ventilsitze (Patentanspruch 2) wird erreicht, daß die Nennweiten für den Druckanschluß und den Arbeitsanschluß des Ventils gleich groß sind. Die aufgrund der unterschiedlichen Durchmesser der Ventilsitze auftretenden unterschiedlichen Öffnungs- bzw. Schließkräfte in den beiden Endstellungen des Ventiltellers werden durch die besondere Ausgestaltung der Magnetkraftkennlinie, deren Verlauf nach bekannten Methoden beeinflußbar ist, kompensiert.

Zur Erzielung einer dichtenden aber besonders reibungsarmen Führung des Magnetankers im Führungsrohr ist in den an das Kopfstück angrenzenden Abschnitt des Führungsrohres eine Folie aus einem fluorhaltigen Polymer auf einer vorgegebenen Länge den Magnetanker an seiner Mantelfläche umfassend eingelegt und radial und axial fixiert. Es hat sich herausgestellt, daß Folie aus einem fluorhaltigem Polymer, beispielsweise Polytetrafluoräthylen (PTFE), Polytetrafluoräthylen-Perfluorpropylen (PFEP), Polychlortrifluoräthylen (PCTFE) oder Polyvinyldenflorid (PVDF) ausgezeichnete Gleiteigenschaften aufweisen und der Verschleiß minimal ist.

Die Fixierung einer derartigen Folie im Führungsrohr kann durch einfaches Einkleben erfolgen, sie kann aber auch (Patentanspruch 3) derart erfolgen, daß die Folie an der dem Kopfstück zugewandten Seite zwischen der Außenseite eines auf die Endfläche des Kopfstückes aufgelegten O-Ringes und der Innenwand des Führungsrohres eingeklemmt ist. Bei dieser Ausführungsform hat es sich gezeigt, daß es ausreicht, die Folie in das Führungsrohr einzulegen und an einem Ende in der angegebenen Weise zu fixieren. Infolge einer besonderen Eigenschaft des verwendeten Folienmaterials haftet dieses nach einiger Zeit des Gebrauchs außerordentlich stark an der als Unterlage dienenden Innenwand des Führunsrohres, weil es zum Teil in die Rauhigkeiten dieser Unterlage hineinfließt. Die sehr gute Gleitfähigkeit stellt sich nach kurzem Gebrauch ein, insbesondere dann, wenn die äußere Mantelfläche des Magnetankers eine gut polierte Oberfläche ist. Es hat sich als vorteilhaft erwiesen, wenn die Oberflächenrauhtiefe an der Mantelfläche des Magnetankers kleiner als 2 μm

ist, während die Oberflächenrauhtiefe an dem von der Folie bedeckten Teil der inneren Mantelfläche des Führungsrohres im Bereich zwischen 0,01 und 0,1 mm liegt.

Es hat sich gezeigt, daß bei einer derartig reibungsarm ausgebildeten Führung des Magnetankers im Führungsrohr die Lebensdauer des Ventils auf das mindestens Vierfache gesteigert werden kann. Weiterhin ist es aufgrund der stark verringerten Reibung möglich, mit kleinerer Magnetspulenleistung zu arbeiten, oder größere Kräfte mit der gleichen Magnetspulenleistung zu erzeugen. Es hat sich herausgestellt, daß der Energiebedarf um bis zu 30 % gesenkt werden kann.

Die besonders vorteilhaften Ausgestaltungen des erfindungsgemäßen Ventils nach den Patentansprüchen 6 und 7 ergeben eine einfache Möglichkeit, das Ventil auf unterschiedliche Durchflußwerte einzustellen.

Es hat sich gezeigt, daß das erfindungsgemäße Ventil auch bei Temperaturzunahme und dadurch bedingte starke Widerstandszunahme einwandfrei funktioniert. Das Ventil ist sowohl bei gasförmigen als auch bei flüssigen Medien einsetzbar.

Im folgenden werden anhand der beigefügten Zeichnungen zwei Ausführungsbeispiele für das erfindungsgemäße 3/2-Wegeventil näher erläutert.

In den Zeichnungen zeigen :

Figur 1   einen Vertikalschnitt nach der Linie I-I in Fig. 2 durch eine erste Ausführungsform eines mit Gleichstrom ansteuerbaren 3/2-Wegeventils ;

Figur 2   einen Horizontalschnitt nach der Linie II-II in Fig. 1 ;

Figur 3   einen Vertikalschnitt analog Fig. 1 durch eine weitere mit Gleichstrom ansteuerbare Ausführungsform eines 3/2-Wegeventils ;

Figur 4   einen Vertikalschnitt analog Fig. 1 durch eine mit Wechselstrom ansteuerbare Ausführungsform eines 3/2-Wegeventils ;

Figur 5   eine Magnetkraftkennlinie für ein 3/2-Wegeventil nach Fig. 1 und 2.

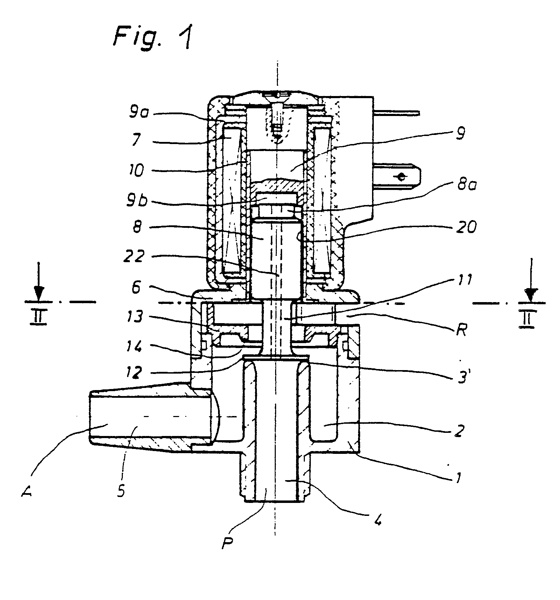

Bei den in den Fig. 1 bis 4 dargestellten Ausführungsbeispielen sind jeweils gleiche Bauteile mit gleichen Bezugsziffern bezeichnet.

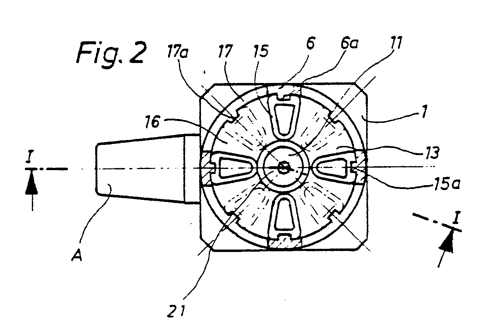

Das in den Fig. 1 und 2 dargestellte 3/2-Wegeventil besitzt ein Ventilgehäuse 1 mit einem Druckanschluß P, der an eine Unterdruckleitung anschließbar ist, sowie einen Arbeitsanschluß A, der an einen Verbraucher, beispielsweise ein Melkzeug, angeschlossen ist. Der Druckanschluß P ist über einen Kanal 4 und der Arbeitsanschluß A über einen Kanal 5 mit einer Ventilkammer 2 verbunden, die einseitig offen im Ventilgehäuse 1 angeordnet ist. Dabei ist das in die Ventilkammer 2 mündende Ende des Kanals 4 als Ventilsitz 3′ ausgebildet.

Auf das Ventilgehäuse 1 ist druckdicht ein Ventiloberteil 6 so aufgesetzt, daß es die Ventilkammer 2 nach außen abschließt. Am Ventiloberteil 6 ist an der Oberseite das Magnetsystem des Ventils angeordnet, mit einer Magnetspule 7, durch die in Längsrichtung ein Führungsrohr 10 hindurchgeführt ist. In das Oberteil der Magnetspule 7 ist ein Kopfstück 9 eingesetzt, das mit dem an der Außenseite der Magnetspule 7 entlanggeführten Magnetjoch 9a verbunden ist. Das Kopfstück 9 und das Magnetjoch 9a bestehen aus magnetisch leitendem Material.

Im Führungsrohr 10 ist bewegbar ein Magnetanker 8 geführt, der an seiner Oberseite einen Ansatz 8a aufweist, der mit einer an der Unterseite des Kopfstücks 9 angeordneten Ausnehmung 9b zusammenwirkt zur Erzielung eines gewünschten Verlaufes der Magnetkraftkennlinie.

Zur dichtenden und reibungsarmen Führung des Magnetankers 8 im Führungsrohr 10 ist in das Führungsrohr eine Folie 20 aus Polytetrafluoräthylen eingeklebt. Die eingeklebte Folie ist so angeordnet, daß sie den magnetischen Fluß nicht behindert, also den Eisenquerschnitt nicht mindert, den Luftspalt nicht vergrößert und den magnetischen Flußweg nicht verlängert.

Das untere Ende des Magnetankers 8 ist über einen Ventilschaft 11 mit einem Ventilteller 12 verbunden, der dem Ventilsitz 3' gegenüberliegt. Zwischen dem Ventiloberteil 6 und dem Ventilgehäuse 1 ist eine Ringplatte 13 eingesetzt, die die Ventilkammer 2 nach oben abschließt und eine mittlere Durchtrittsöffnung aufweist, die an der der Ventilkammer 2 zugewandten Seite als zweiter Ventilsitz 14 ausgebildet ist. Durch die Öffnung des Ventilsitzes 14 ist der Ventilschaft 11 hindurchgeführt, so daß der beidseitig wirkende Ventilteller 12 wahlweise den ersten Ventilsitz 3' oder den zweiten Ventilsitz 14 abschließt, je nach der Stellung des Magnetankers 8.

Der Durchmesser des zweiten Ventilsitzes 14 ist größer als der Durchmesser des ersten Ventilsitzes 3', wobei der Durchmesserunterschied so gewählt ist, daß unter Berücksichtigung der Dicke des Ventilschaftes 11 ein ringförmiger Durchtrittsraum in der Öffnung des zweiten Ventilsitzes 14 entsteht, dessen Durchtrittsquerschnitt dem Durchtrittsquerschnitt des ersten Ventilsitzes 3' entspricht.

An der Oberseite der Ringplatte 13 sind insgesamt vier radial verlaufende Aufsätze 15 angeordnet. Die Zwischenräume zwischen den Aufsätzen 15 stellen radial verlaufende Strömungskanäle 16 dar. In der Außenwand des Ventiloberteils 6 sind Durchtrittsschlitze 17 vorgesehen, die den mit dem Außenraum verbundenen Rücklaufanschluß R des Ventils darstellen. Die Strömungskanäle 16 sind unmittelbar mit der Öffnung des zweiten Ventilsitzes 14 verbunden und die Ringplatte 13 kann, wie aus Fig. 2 ersichtlich, so eingesetzt sein, daß die Aufsätze 15 mit Ausnehmungen 15a in Nasen 6a einrasten, die an der Innenseite des Ventiloberteils 6 angeordnet sind, und zwar so, daß die Eintrittsöffnungen der Strömungskanäle 16 mit den Durchtrittsschlitzen 17 fluchten. Damit ist der Rücklaufanschluß R auf maximalen Durchfluß eingestellt.

Die Ringplatte 13 kann aber auch so in das Ventilgehäuse 1 eingesetzt sein, daß sich die Aufsätze 15 in der in Fig. 2 strichpunktiert eingezeichneten Lage befinden, in der die Ausnehmungen 15a in Nasen 17a einrasten, die an der Innenseite des Ventiloberteils 6 im Bereich der Durchtrittsschlitze 17 angeordnet sind. Wie ebenfalls aus Fig. 2 abzulesen, ist in dieser Stellung der Ringplatte 13 der Durchflußquerschnitt durch den Rücklaufanschluß R gedrosselt, weil in dieser Stellung die Aufsätze 15 einen Teil des Eintrittsquerschnittes der Durchtrittsschlitze 17 abdecken.

Wie Fig. 1 zu entnehmen, ist der Druckanschluß P in Richtung der Längsmittelachse des Ventils angeordnet, während der Arbeitsanschluß A an der Seitenfläche des Ventilgehäuses 1, also unter einem Winkel von 90°, zum Druckanschluß P angeordnet ist. Dieser eröffnet die Möglichkeit, mehrere der in Fig. 1 und 2 dargestellten Ventile zu einem Block zusammenfassen und an eine nicht dargestellte gemeinsame Unterdruckleitung mit den Druckanschlüssen P anzuschließen. An die dann parallelstehenden Arbeitsanschlüsse A verschiedener Ventile können die zu den Verbrauchern führenden Zuleitungen angeschlossen werden.

Das Ventil ist leicht auseinandernehmbar und zusammensetzbar, da es aus nur vier auseinandernehmbaren Teilen aufgebaut sein kann, nämlich dem Ventilgehäuse 1, dem Ventiloberteil 6, an dem das Magnetsystem fest angeordnet ist, dem Magnetanker 8, an dem der Ventilteller 12 fest angeordnet ist und der zwischen Ventiloberteil 6 und Ventilgehäuse 1 einsetzbaren Ringplatte 13. Dies hat zur Folge, daß ein Auseinandernehmen des Ventils zu Reinigungszwecken oder zum Verstellen der Ringplatte 13 auch von nichtfachkundigen Benutzern durchgeführt werden kann.

Bei der in den Fig. 1 und 2 dargestellten Ausführungsform ist der Raum 9b oberhalb des Magnetankers 8 an einen durch den Magnetanker 8 und den Ventilschaft 11 hindurchgeführten Verbindungskanal 22 angeschlossen, der am Ventilteller 12 an der dem ersten Ventilsitz 3' zugewandten Seite ausmündet. Auf diese Weise ist der Raum 9b wechselweise mit dem Druckanschluß P oder (im geöffneten Zustand des Ventils) mit dem Arbeitsanschluß A verbunden. Bei dieser Ausführungsform ist in einer auch in Fig. 1 angedeuteten Weise dafür gesorgt, daß die wirksame Querschnittsfläche des Ventilsitzes 3' und des Ventilsitzes 14 größer ist als die wirksame Querschnittsfläche des Magnetankers 8. Dies hat zur Folge, daß im geschlossenen Zustand des Ventils an der Unterseite des Ventiltellers 12 der gleiche Unterdruck herrscht wie im Raum 9b oberhalb des Magnetankers. Auf den Ventilteller 12 wirkt dann nur eine Schließkraft, die der Differenz der beiden obengenannten wirksamen Flächenquerschnitte entspricht. Es braucht daher beim Öffnen des Ventils durch das Magnetsystem auch nur eine Kraft erzeugt werden, die dieser Differenz entspricht. Dadurch kann die zum Öffnen erforderliche elektrische Leistung auf einen Bruchteil des sonst erforderlichen Wertes reduziert werden. Es hat sich gezeigt, daß die Spalte zwischen dem Magnetanker 8 und der Folie 20 so klein gehalten werden können, daß ein Austausch zwischen dem Raum 9b und dem Rücklaufanschluß R, also dem Außenraum, praktisch nicht stattfindet.

Befindet sich das Ventil in dem gegenüber dem Druckanschluß P geöffneten Zustand, in dem der Ventilteller 12 am zweiten Ventilsitz 14 anliegt, so ist der Raum 9b oberhalb des Magnetankers 8 über den Verbindungskanal 22 sowohl mit dem Druckanschluß P als auch dem Arbeitsanschluß A verbunden und es wirkt weiterhin eine der oben bezeichneten Flächendifferenz entsprechende Schließkraft in Abhängigkeit vom herrschenden Unterdruck. Beim Entregen des Magnetsystems schließt das Ventil selbsttätig, ohne daß eine Rückholfeder notwendig wäre.

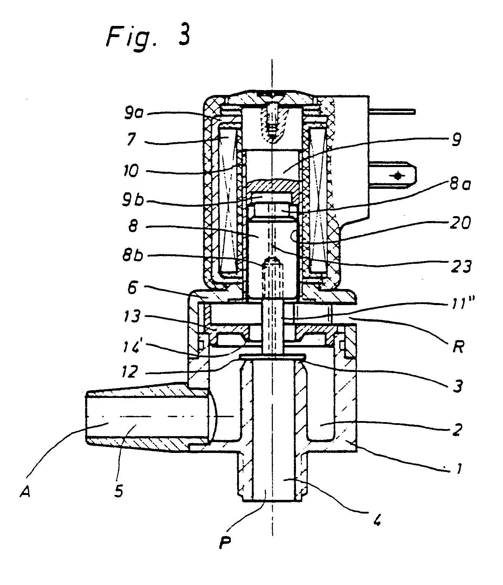

In Fig. 3 ist ein 3/2-Wegeventil dargestellt, das analog aufgebaut ist, wie das in Fig. 1 dargestellte Ventil, aber mit seinem Druckanschluß P an eine Überdruckleitung anschließbar ist, während der Arbeitsanschluß A ebenfalls an einen Verbraucher anschließbar ist.

Dieses Ventil unterscheidet sich von den oben beschriebenen Ventilen dadurch, daß die wirksamen Querschnitte der Ventilsitze 3 und 14' so bemessen sind, daß sie um einen vorgegebenen Betrag kleiner sind als die wirksame Querschnittsfläche des Magnetankers 8. Der Raum 9b oberhalb des Magnetankers 8 ist über einen Verbindungskanal 23 mit der dem Ventilsitz 3 zugekehrten Oberfläche des Ventiltellers 12 verbunden, in die er ausmündet. In dem in Fig. 3 dargestellten entregten Zustand des Magnetsystems sind zwei Flächen wirksam, nämlich die Querschnittsfläche des Magnetankers 8 und die Fläche unter dem ersten Ventilsitz 3. Der Flächendifferenz entsprechend ist das Ventil mit einer sich aus dem Druck ergebenden Schließkraft geschlossen, ohne daß eine besondere Schließfeder notwendig ist. Beim Öffnen des Ventils muß wiederum nur eine dieser Flächendifferenz entsprechende Öffnungskraft aufgebacht werden. Im erregten Zustand des Magnetsystems sind ebenfalls zwei Flächen wirksam, nämlich einmal die wirksame Querschnittsfläche des Magnetankers 8 und die Fläche unter dem zweiten Ventilsitz 14'. Auch in diesem Zustand hat das Magnetsystem nur die Aufgabe, den Magnetanker 8 gegen eine die Flächendifferenz entsprechende Kraft zu halten. Auch dieses Ventil kann ohne Rückholfeder betrieben werden, wenn es mit einem minimalen Mediumsdruck angesteuert wird. Für den Fall, daß das Ventil vom Druck Null an eingesetzt werden soll, ist eine kleine Feder erforderlich, die aber lediglich die äußerst geringen Reibungskräfte am Magnetanker 8 überwinden muß.

Um den Zusammenbau des Ventils zu erleichtern, ist bei dieser Ausführungsform der Ventilschaft 11" in eine Bohrung 8b des Magnetankers 8 eingeschraubt.

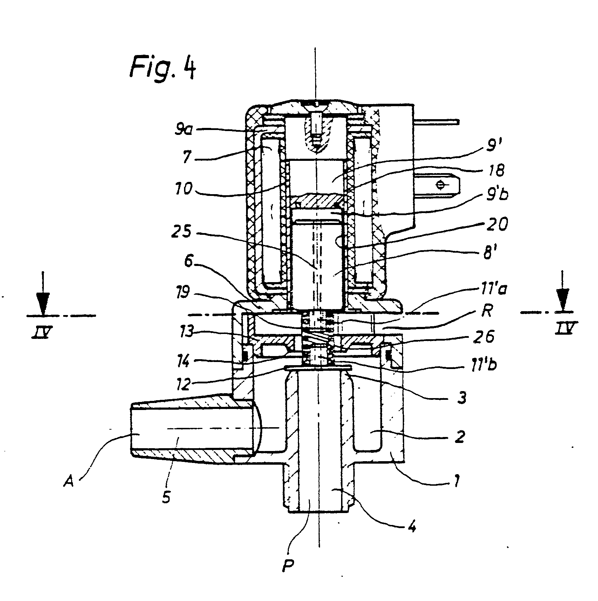

In Fig. 4 ist eine Variante der Ausführungsform eines 3/2-Wegeventils nach Fig. 1 dargestellt, die zur Ansteuerung durch Wechselstrom besonders geeignet ist.

In Fig. 4 sind alle Bauteile, die der Ausführungsform nach Fig. 1 entsprechen, mit gleichen Bezugsziffern bezeichnet und es wird bezüglich dieser Einzelteile auf die oben gegebene Beschreibung der Ausführungsform nach Fig. 1 hingewiesen.

Das in Fig. 4 dargestellte Ventil weist ein in die Magnetspule 7 eingesetztes Kopfstück 9' auf, in dessen untere Fläche, die dem Magnetanker 8' zugewandt ist, ein Kurzschlußring 18 eingesetzt ist.

Weiterhin ist bei dieser Ausführungsform der Ventilteller 12 mit dem Magnetanker 8' nicht durch einen durchgehenden starren Ventilschaft verbunden, sondern der Ventilschaft weist eine durch ein Federlement überbrückte Unterbrechung auf. Dies wird dadurch erreicht, daß an der Unterseite des Magnetankers 8' ein Zapfen 11'a und an der Oberseite des Ventiltellers 12 ein Zapfen 11'b angeordnet sind und auf diese beiden Zapfen die Enden einer Schraubenfeder 19 aufgeschoben sind. Durch diese Ausbildung wird ein Flattern des Ventiltellers im Betrieb mit Wechselstrom verhindert.

Bei der Ausführungsform nach Fig. 4 ist ähnlich wie bei der Ausführungsform nach Fig. 1 der Raum 9'b oberhalb des Magnetankers 8' über einen Verbindungskanal 25, der sowohl durch den Magnetanker 8', den Zapfen 11'a und den Zapfen 11'b geführt ist mit der dem Ventilsitz 3 zugewandten Seite des Ventiltellers 12 verbunden. Damit diese Verbindung durch die Unterbrechung zwischen den Stirnseiten der Zapfen 11'a und 11'b nicht gestört wird, ist außen über die Schraubendruckfeder 19 ein dichtender Schlauch, beispielsweise Gummischlauch 26, gezogen. Auf diese Weise hat das Ventil die gleichen Eigenschaften wie das anhand von Fig. 1 beschriebene Ventil und es sind zum Öffnen und Schließen nur die den vorgegebenen Flächendifferenzen zwischen den Ventilsitzen 3 und 14 einerseits und dem Magnetanker 8' andererseits wirksam, so daß das Ventil bei geringstem Energieverbrauch und ohne Rückholfeder arbeitet.

In den übrigen Einzelmerkmalen entspricht die Ausführungsform nach den Fig. 4 der Ausführungsform nach Fig. 1.

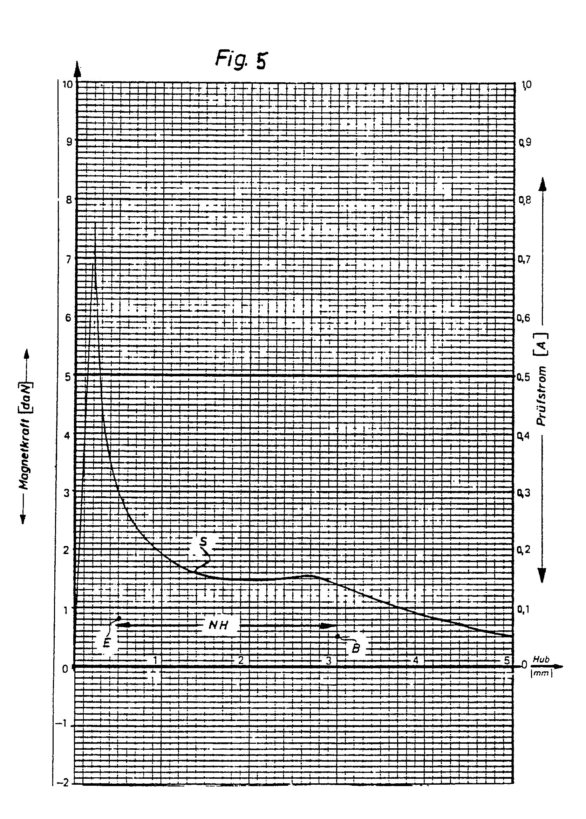

Die Ausbildung der beiden Ventilsitze 3 und 14 mit verschiednenen Durchmessern hat zur Folge, daß im Betrieb des Ventils, bei dem der Druckanschluß P an eine Unterdruckleitung angeschlossen ist, in den beiden Endstellungen des Ventiltellers 12 auf dem ersten Ventilsitz 3 bzw. dem zweiten Ventilsitz 14 aufgrund der unterschiedlichen Dichtungsquerschnitte unterschiedliche Schließ- bzw. Öffnungskräfte wirksam sind, die jeweils von der wirkenden Magnetkraft zu überwinden sind. Dies hat zur Folge, daß die Magnetkraftkennlinie des Magnetsystems einen solchen Verlauf haben muß, daß in den beiden Endstellungen jeweils eine ausreichende Kraft zur Verfügung steht. Andererseits soll aber die Magnetkraftkennlinie auch einen Verlauf besitzen, der eine besonders günstige Leistungsaufnahme garantiert. Es hat sich herausgestellt, daß in diesem Falle eine Magnetkraftkennlinie besonders günstig ist, die im Bereich zwischen den beiden Endstellungen des Ventiltellers 12 einen Sattel aufweist. Eine derartige Magnetkraftkennlinie ist in Fig. 5 dargestellt.

In Fig. 5 ist die wirkende Magnetkraft bei einem 3/2-Wegeventil, das gemäß Fig. 1 und 2 aufgebaut ist, gegen den Hub des Magnetankers aufgetragen, wobei die obere Endstellung des Ventiltellers 12 am Ventilsitz 14 mit E (evakuieren) und die untere Endstellung am Ventilsitz 3′ mit B (belüften) bezeichnet ist, der Nennhub NH zwischen den beiden Stellungen E und B beträgt etwa 2,5 mm und, wie Fig. 5 zu entnehmen, weist die Kennlinie im Bereich zwischen den beiden Stellungen E und B einen Sattel S auf. Der Prüfstrom betrug 0,5 A. Die Kennlinie wurde unter « worst case »-Bedingungen aufgenommen, d. h. bei maximaler Erwärmung und minimaler Speisespannung.

Punkt B in Fig. 5 ist der Kraft gleichzusetzen, die erforderlich ist, um den Ventilteller 12 bzw. den Magnetanker 8 gegen ein anstehendes 60 %iges Vakuum anzuziehen. Nach seiner Betätigung durcheilt der Magnetanker den Nennhub NH von 2,5 mm und muß nun am zweiten Ventilsitz 14 eine größere Fläche gegen das Vakuum abdichten. Die hierfür erforderliche größere Kraft ist durch den Punkt E gegeben. Die wirklich zur Verfügung stehende Magnetkraft ist in beiden Punkten erheblich größer als die notwendige Kraft. Durch den Sattel S der Magnetkraftkennlinie wird erreicht, daß in den beiden Punkten B und E ein ausreichender Kraftüberschuß vorhanden ist, die Differenz zwischen den in den beiden Punkten vorhandenen Magnetkräften aber nicht allzugroß ist, wodurch eine günstige Leistungsbilanz erreicht wird.

**Patentansprüche**

1. Elektromagnetisch betätigbares 3/2-Wegeventil zur Steuerung eines Verbrauchers in einem Druckleitungssystem, mit einem Ventilgehäuse (1), in dem eine einseitig offene Ventilkammer (2) angeordnet ist, die durch einen ersten Ventilsitz (3, 3′) und einen ersten Kanal (4) mit einem Druckanschluß (P) und über einen zweiten Kanal (5) mit einem Arbeitsanschluß (A) verbunden ist und einem die offene Seite der Ventilkammer (2) abschließenden, mit dem Ventilgehäuse (1) fest verbundenen Ventiloberteil (6), an dem ein Magnetsystem (7 bis 9) angeordnet ist, mit einer Magnetspule (7), in welcher ein in einem Führungsrohr (10) geführter Magnetanker (8,8′) angeordnet ist, der einem im Oberteil der Magnetspule (7) angeordneten, mit einem Magnetjoch (9a) verbundenen Kopfstück (9, 9′) gegenüberliegt und der an seinem, dem ersten Ventilsitz (3, 3′) zugekehrten Ende mit einem beidseitig wirkenden Ventilteller (12) verbunden ist, wobei gegenüber der dem ersten Ventilsitz (3, 3′) abgewandten Seite des Ventiltellers (12) ein zweiter Ventilsitz (14, 14′) angeordnet ist, durch den die Ventilkammer (2) mit einem seitlich am Ventiloberteil (6) im Bereich zwischen dem zweiten Ventilsitz (14, 14′) und dem unteren Ende des Führungsrohres (10) für den Magnetanker (8, 8′) angeordneten Rücklaufanschluß (R) verbunden ist und der Magnetanker (8, 8′) mit dem Ventilteller (12) über einen durch die Öffnung des zweiten Ventilsitzes (14, 14′) hindurchgeführten, einen ringförmigen Durchtrittsraum freilassenden Ventilschaft (11, 11″, 11′a, 11′b) verbunden ist und der Raum (9b, 9′b) zwischen Magnetanker (8, 8′) und Kopfstück (9, 9′) über einen durch den Magnetanker und den Ventilschaft (11, 11″, 11′a, 11′b) geführten Verbindungskanal (22, 23, 25), der an der dem ersten Ventilsitz (3, 3′) zugewandten Seite des Ventiltellers (12) ausmündet mit dem Raum unterhalb des Ventiltellers verbunden ist, dadurch gekennzeichnet, daß die Querschnittsfläche des Durchtrittsraums zwischen dem Ventilschaft (11, 11′) und dem zweiten Ventilsitz (14, 14′) gleich der wirksamen Querschnittsfläche des Druckanschlusses (P) ist und der Magnetanker (8, 8′) gegenüber dem Medium dichtend aber reibungsarm im Führungsrohr (10) geführt ist, indem im Führungsrohr (10) eine Folie (20) aus einem fluorhaltigen Polymer in den an das Kopfstück (9, 9′) angrenzenden Abschnitt des Führungsrohres (10) auf einer vorgegebenen Länge den Magnetanker (8, 8′) an seiner Mantelfläche umfassend eingelegt und radial und axial fixiert ist, wobei die wirksame Querschnittsfläche des Magnetankers (8, 8′) bei einem Ventil für ein Unterdruckleitungssystem um einen vorgegebenen Betrag kleiner und bei einem Ventil für ein Überdruckleitungssystem um einen vorgegebenen Betrag größer ist als der wirksame Querschnitt jedes der beiden Ventilsitze (3, 3′, 14, 14′).

2. 3/2-Wegeventil nach Anspruch 1, dadurch gekennzeichnet, daß der Durchmesser des zweiten Ventilsitzes (14, 14′) größer ist als der Durchmesser des ersten Ventilsitzes (3, 3′).

3. 3/2-Wegeventil nach Anspruch 1 oder 2, dadurch gekennzeichnet, daß die Folie zur radialen und axialen Fixierung an der dem Kopfstück zugewandten Seite zwischen der Außenseite eines auf die Endfläche des Kopfstückes aufgelegten 0-Ringes der Innenwand des Führungsrohres eingeklemmt ist.

4. 3/2-Wegeventil nach einem der Ansprüche 1 bis 3, dadurch gekennzeichnet, daß die Oberflächenrauhtiefe an der Mantelfläche des Magnetankers (8, 8′) kleiner als 2 µm ist, während die Oberflächenrauhtiefe an dem von der Folie (20) bedeckten Teil der inneren Mantelfläche des Führungsrohres (10) im Bereich zwischen 0,01 und 0,1 mm liegt.

5. 3/2-Wegeventil nach einem der Ansprüche 1 bis 4 zur Betätigung durch Wechselstrom, dadurch gekennzeichnet, daß im Kopfstück (9′) an der dem Magnetanker (8′) zugewandten Seite ein Kurzschlußring (18) angeordnet ist und der Ventilschaft (11′a, 11′b) eine durch ein Federelement (19) überbrückte Unterbrechung aufweist.

6. 3/2-Wegeventil nach einem der Ansprüche 1 bis 5, dadurch gekennzeichnet, daß der zweite Ventilsitz an der Unterseite einer zwischen Ventilgehäuse (1) und Ventiloberteil (6) eingesetzten Ringplatte (13) angeordnet ist, die an ihrer Oberseite radiale Strömungskanäle (16) aufweist, die mit dem Rücklaufanschluß (R) verbunden sind, wobei die Strömungskanäle (16) in mit dem Außenraum verbundene, den Rücklaufanschluß (R) bildende Durchtrittsschlitze (17) im Ventiloberteil (6) einmünden.

7. 3/2-Wegeventil nach Anspruch 6, dadurch gekennzeichnet, daß die Ringplatte (13) in mindestens zwei gegeneinander um einen vorgegebenen Winkel verdrehten Positionen in das Ventilgehäuse (1) einsetzbar ist, wobei in mindestens einer der Positionen die Eintrittsöffnungen der Strömungskanäle (16) gegen die Durchtrittsschlitze (17) so versetzt angeordnet sind, daß ein verkleinerter Durchtrittsquerschnitt entsteht.

8. 3/2-Wegeventil nach einem der Ansprüche 6 oder 7, dadurch gekennzeichnet, daß es aus den vier auseinandernehmbaren und wieder zusammensetzbaren Teilen, dem Ventilgehäuse 1, dem Ventiloberteil (6), der Ringplatte (13) und dem Magnetanker (8) mit Ventilteller (12), besteht.

**Claims**

1. An electro-magnetically actuated 3/2-way valve for the control of a consumer in a pressurized conduit system, comprising a valve housing (1) having arranged therein a valve chamber (2) which is open at one side, and which is connected through a first valve seat (3, 3′) and a first passage (4), with a pressure connector (P) and, through a second passage (5), with a working connector (A), and comprising an upper valve section (6) closing the open side of the valve chamber (2) and being firmly connected to the valve housing (1), a magnetic system (7 to 9) being arranged at the upper valve section, said magnetic system including a magnet coil (7) having arranged therein an armature (8, 8′) which slides in a guide tube (10) and opposes a head piece (9, 9′) which is received in an upper section of the magnet coil (7) and is connected with a magnet yoke (9a), and said armature being connected at its end facing towards the first valve seat (3, 3′), with a double acting valve plate (12), whereby a second valve seat (14, 14′) is provided on the side of the valve plate (12) facing away from the first valve seat (3, 3′), through which second valve seat (14, 14′) the valve chamber (2) is connected with a return connector (R) arranged laterally of the upper valve section (6) in the range between the second valve seat (14, 14′) and the lower end of the guide tube for the armature (8, 8′), whereby the armature (8, 8′) is connected with the valve plate (12) through a valve stem (11, 11″, 11′a, 11′b) passing through the opening of the second valve seat (14, 14′) and defining therewith an annular penetration space, and whereby the space (9b, 9′b) between the armature (8, 8′) and the head piece (9, 9′) is connected with the space below the valve plate through a connecting passage (22, 23, 25) extending through the armature and the valve stem (11, 11″, 11′a, 11′b) and opening out on the side of the valve plate (12) facing towards the first valve seat (3, 3′), characterized in that the cross-sectional surface of the penetration space between the valve stem (11, 11′) and the second valve seat (14, 14′) equals the effective cross-sectional surface of the pressure connector (P), and that the armature (8, 8′) slides in the guide tube (10) in sealing relation to the medium but in low-friction manner by providing, in the guide tube (10), a foil (20) of a fluor-containing polymer which extends within the section of the guide tube (10) adjacent to the head piece (9, 9′) over a predetermined length, and which is inserted so as to surround the armature (8, 8′) on the outer surface thereof and is radially and axially fixed, whereby, in a valve for a low-pressure conduit system, the effective cross-sectional surface of the armature (8, 8′) is by a predetermined amount smaller and, in a valve for an overpressure conduit system, is by a predetermined amount larger than the effective cross-sectional surface of each of the two valve seats (3, 3′, 14, 14′).

2. A 3/2-way valve as claimed in claim 1, characterized in that the diameter of the second valve seat (14, 14′) is larger than that of the first valve seat (3, 3′).

3. A 3/2-way valve as claimed in claim 1 or 2, characterized in that the foil, for the radial and axial fixation thereof on the side facing towards the headpiece, is clamped between the outside of an 0-ring which is placed on the endface of the head piece, and the inner wall of the guide tube.

4. A 3/2-way valve as claimed in any of claims 1 to 3, characterized in that the surface roughness depth (peak-to-valley height) on the outer surface of the armature (8, 8′) is smaller than 2 μm, whereas the surface roughness depth on the inner surface of the guide tube (10) in the section covered by the foil (20), is in the range between 0.01 and 0.1 mm.

5. A 3/2-way valve as claimed in any of claims 1 to 4, designed for actuation by A.C., characterized in that a short-circuit ring (18) is provided in the head piece (9′) on the side facing towards the armature (8′), and that the valve stem (11′a, 11′b) comprises an interruption which is bridged by a spring member (19).

6. A 3/2-way valve as claimed in any of claims 1 to 5, characterized in that the second valve seat is arranged on the lower side of a circular plate (13) which is inserted between the valve housing (1) and the upper valve section (6), said circular plate (13) comprising, on its upper side, radial flow passages (16) communicating with the return connector (R), whereby said flowpassages (16) open out into through-flow slots (17) in the upper valve section (6), said slots which form the return connector (R), communicating with the atmosphere.

7. A 3/2-way valve as claimed in claim 6, characterized in that the circular plate (13) is adapted to be inserted in the valve housing (1) in at least two different positions which are offset to one another by a predermined angle, whereby in at least one of the positions, the inlet openings of the flow passages (16) are offset relative to the through-flow slots (17) in such a way that a reduced cross section of the through-flow is obtained.

8. A 3/2-way valve as claimed in one of claims 6 or 7 characterized in that it consists of the four components which are adapted to be dismantled and put together again : the valve housing (1), the upper valve section (6), the circular plate (13), and the armature (8) with the valve plate (12).

## Revendications

1. Soupape à trois voies et deux positions pouvant être actionnée électromagnétiquement pour la commande d'un appareil utilisateur dans un système de conduite sous pression, comportant un carter (1) de soupape dans lequel est disposée une chambre de soupape (2) ouverte d'un côté qui communique par l'intermédiaire d'un premier siège de soupape (3, 3') et un premier canal (4) avec un raccord de pression (P) et par l'intermédiaire d'un deuxième canal (5) avec un raccord de travail (A) et une partie supérieure de soupape (6) rigidement assemblée au carter (1) de façon à fermer le côté ouvert de la chambre de soupape (2), sur ladite partie supérieure de soupape étant disposé un système magnétique (7 à 9) comportant une bobine d'électro-aimant (7) dans laquelle est monté un induit d'aimant (8, 8') introduit dans un tube de guidage (10) en regard dudit induit se trouvant une pièce de tête (9, 9') disposée dans la partie supérieure de la bobine d'électro-aimant (7) et assemblée à une culasse magnétique (9a) et l'extrémité dudit induit tournée vers le premier siège de soupape (3, 3') étant assemblée à un plateau de soupape (12) agissant des deux côtés, en regard du côté du plateau (12) éloigné du premier siège (3, 3') étant disposé un deuxième siège de soupape (14, 14') par l'intermédiaire duquel la chambre de soupape (2) est en communication avec un raccord de retour (R) disposé latéralement sur la partie supérieure de soupape (6) dans la région comprise entre le deuxième siège de soupape (14, 14') et l'extrémité inférieure du tube de guidage (10) de l'induit d'aimant (8, 8') et l'induit d'aimant (8, 8') étant assemblé au plateau de soupape (12) par l'intermédiaire d'une tige de soupape (11, 11'', 11'a, 11'b) introduite dans l'ouverture du deuxième siège de soupape (14, 14') en laissant subsister un espace de passage de forme annulaire, tandis que l'espace (9b, 9'b) compris entre l'induit d'aimant (8, 8') et la pièce de tête (9, 9') est en communication avec l'espace se trouvant en dessous du plateau de soupape par l'intermédiaire d'un canal de communication (22, 23, 25) traversant l'induit d'aimant et la tige de soupape (11, 11'', 11'a, 11'b) et débouchant du côté du plateau de soupape (12) tourné vers le premier siège de soupape (3, 3'), caractérisée par le fait que la surface de section droite de l'espace de passage compris entre la tige de soupape (11, 11') et le deuxième siège de soupape (14, 14') est égale à la surface de section droite efficace du raccord de pression (P) et l'induit d'aimant (8, 8') est engagé dans le tube de guidage (10) d'une manière étanche vis-à-vis du milieu mais avec une faible friction, en ce que dans le tube de guidage (10) est insérée et fixée radialement et axialement une feuille (20) en un polymère en teneur en fluor dans la section de longueur prédéterminée dudit tube de guidage (10) adjacente à la pièce de tête (9, 9'), en entourant la surface latérale de l'induit d'aimant (8, 8'), la surface de section droite efficace de l'induit d'aimant (8, 8') étant plus petite dans une mesure prédéterminée pour un système de conduite en dépression et plus grande dans une mesure prédéterminée pour un système de conduite en surpression que la section droite efficace de chacun des deux sièges de soupape (3, 3', 14, 13').

2. Soupape à trois voies et deux positions selon la Revendication 1, caractérisée par le fait que le diamètre du deuxième siège de soupape (14, 14') est plus grand que le diamètre du premier siège de soupape (3, 3').

3. Soupape à trois voies et deux positions selon la Revendication 1 ou 2, caractérisée par le fait que pour la fixation radiale et axiale du côté tourné vers la pièce de tête, la feuille est coincée entre le côté extérieur d'un joint torique engagé sur la surface d'extrémité de la pièce de tête et la paroi intérieure du tube de guidage.

4. Soupape à trois voies et deux positions selon l'une des Revendications 1 à 3, caractérisée par le fait que la profondeur de rugosité superficielle sur la surface latérale de l'induit d'aimant (8, 8') est inférieure à 2 $\mu$m, tandis que la profondeur de rugosité superficielle sur la partie de la surface latérale intérieure du tube de guidage (10) recouverte par la feuille (20) se trouve dans le domaine compris entre 0,01 et 0,1 mm.

5. Soupape à trois voies et deux positions selon l'une des Revendications 1 à 4 destinée à être actionnée par courant alternatif, caractérisée par le fait que dans la pièce de tête (9') est disposée du côté tourné vers l'induit d'aimant (8') une bague de court-circuit (18) et que la tige de soupape (11'a, 11'b) présente une interruption pontée par un élément de ressort (19).

6. Soupape à trois voies et deux positions selon l'une des Revendications 1 à 5, caractérisée par le fait que le deuxième siège de soupape est monté sur le côté inférieur d'une plaque annulaire (13) interposée entre le carter (1) de soupape et la partie supérieure (6) de soupape et présentant sur son côté supérieur des canaux d'écoulement (16) radiaux qui communiquent avec le raccord de retour (R), les canaux d'écoulement (16) débouchant dans la fente de passage

(17) de la partie supérieure de soupape (6) formant le raccord de retour (R) et communiquant avec l'extérieur.

7. Soupape à trois voies et deux positions selon la Revendication 6, caractérisée par le fait que la plaque annulaire (13) peut être utilisée dans le carter de soupape (1) dans au moins deux positions décalées l'une par rapport à l'autre en rotation suivant un angle prédéterminé, dans au moins l'une des positions les ouvertures d'entrée des canaux d'écoulement (16) étant disposées en décalage par rapport aux fentes de passage de façon qu'il en résulte une section droite de passage diminuée.

8. Soupape à trois voies et deux positions selon l'une des Revendications 6 ou 7, caractérisée par le fait qu'elle se compose des quatre parties pouvant être désassemblées et réassemblées, du carter (1) de soupape, de la partie supérieure (6) de soupape, de la plaque annulaire (13) et de l'induit d'aimant (8) comportant les plateaux (12) de soupape.

0 110 139

Fig. 1

9a
7
10
9b
8
22
6
13
14
12

9
8a
20
11
R
3'
2
1
4

A
5
P

1

Fig. 2

Fig. 3

Fig. 4

Fig. 5